# EUROPEAN PATENT APPLICATION

(11) **EP 1 528 387 A2**
(43) Date of publication of application: **04.05.2005**
(21) Application number: 04024732.2
(22) Date of filing: 16.10.2004
(51) Int. Cl.: G01N 15/12, B01L 3/00

(54) **Method for discrimination of particles in a flow cytometer**

(30) Priority: 27.10.2003 EP 03024654
(71) Applicant: Leister Process Technologies, 6060 Sarnen (CH)
(72) Inventor: Gawad, Shady, 1110 Morges (CH); Renaud, Philippe, 1028 Préverenges (CH); Brander, Karl, 4629 Fulenbach (CH); Hessler, Thomas, 6056 Kägiswil (CH)
(74) Representative: Klocke, Peter, Dipl.-Ing.

(57) **Abstract**

Method for the discrimination of particles, preferably biological cells, in a measurement channel by impedance spectroscopy. The channel encloses a liquid for transporting the particles for use in a microfabricated flow cytometer. A pair of measurement electrodes and a pair of reference electrodes are arranged in the measurement channel for providing a measurement volume between the electrodes. During movement of one particle through the pair of measurement electrodes; the pairs of measurement and the reference electrodes are admitted with same input signals having different frequencies and the respective measurement values are determined. The measurement values obtained at the measurement electrodes are compared with the measurement values obtained at the reference electrodes for the determination of particle specific values dependent of the frequencies of the input signals of the particle being moved through the measurement channel. Then the particle specific values received at different frequencies are normalized to a particle specific basic value at a basic frequency; and finally the normalized particle specific values are compared with corresponding values of at least one reference particle at the same different frequencies in dependence of the particle specific basic value at a basic frequency. The comparison shows in relation to the reference values changes in the capacitance or in the conductance of the particle. In connection with the discrimination of cells these changes correspond with changes in the membrane or the cytoplasm, respectively.

## Description

The present invention refers to a method for the discrimination of particles, preferably biological cells, by impedance spectroscopy in a measurement channel which encloses a liquid for transporting the particles, for use in a microfabricated flow cytometer.

The emerging field of microfabricated flow cytometry devices has recently been a subject of interest for a number of researches using electrical or optical detection techniques. Flow impedance measurement of cells in a miniaturized device offers many advantages over conventional techniques, such as the integration of reference measurement electrodes, the use of centering techniques using sheath flow or dielectrophoretic forces, the measurement per se, and the implementation of cell sorting or electroporation in-situ. In such a device, the electrodes can be directly patterned on the channel walls, using conventional photolithography techniques, and the detection volume can be defined in a channel having an unvarying cross-section. Alternatives to the direct impedance measurement have also raised considerable interest; one example is the use of ponderomotive techniques to measure electrical properties of single cells by dielectrophoresis. Typically, in electrorotation, the cell is polarized by a rotating AC field. The frequency-dependent torque generates a rotational response from the cell, which is measured optically. This technique is very precise and provides reliable measured values of the dielectric properties of single cells, but the measurement is time consuming, should be carried out by trained personnel, and the interpretation of the spectrum data requires complex models.

Cellular physiological function is determined by myriad of biochemical reactions and biophysical processes coordinated in time and space by cellular control mechanisms. Living cells have many interesting properties: they offer miniature size, biological specificity, signal amplification, surface binding capability, selfreplication, multivariate detection, and other benefits. Their engineering requires rapid characterization methods. While current optical and chemical detection techniques can effectively analyse biological systems, a number of disadvantages restrict their versatility. As examples: most samples must be chemically altered prior to analysis, and photobleaching can place a time limit on optically probing fluorophore-tagged samples. Purely electronic techniques provide solutions to many such problems, as they can probe a sample and its chemical environment directly over a range of time scales, without requiring any chemical modifications.

One example of electronic detection is electrical impedance spectroscopy (EIS) examining permittivity as a function of frequency. EIS is a known non-invasive method for characterising cell suspensions or tissues. Impedance spectroscopy involves passing an alternating current over a range of frequencies through an object to determine the functional form of its electrical impedance. The application of this technique to biological material has been described by numerous investigators. Because currents will pass either around or through cells depending on the frequency, EIS can be used to observe the structure and arrangement of cells on top of pure exact volume and size determination. For instance, the development of a technology, termed electronic pathology, is possible. Its objectives include replacing manual microscopy and stains to detect and isolate abnormal cells from biological fluids. Pathologists detect diseased states by identifying changes in the size, shape, morphology and nuclear structure of cells.

The detection, sorting and isolation of pathological cells, based on these same structural parameters, can be achieved by exploiting their intrinsic dielectric properties.

Nowadays, the advances in the manufacture of micro-devices and microelectrodes permit to place single cells or cultured cells in small cavities. With multi-electrode arrangements, one can expect to perform cell or growing tissue imaging (micro-impedance tomography). The use of multiple microelectrodes can help to obtain rapid evaluation of cellular parameters. The quantities that can be obtained include extracellular and cytoplasmic conductivity, membrane capacitance and conductance, protein content, cell size and shape. Distribution functions of these parameters representing the variance of these properties when large cell populations are evaluated sequentially could also be obtained. A first step in this direction is the Coulter counter.

The above described technique could be applied also to cultured cells, establishing data that show how cellular dielectric properties and shape quantities depend on cell type and abnormality. The gross size and shape of a cell, its fine but distinct membrane surface features, texture, membrane composition, for example, are important factors influencing EIS below 1MHz. At higher frequencies, the internal volume and composition of a cell become important. Differences in the physical properties of a cell type can be exploited. This will reflect differences in the mechanical resilience of a cell, and the extent to which the membrane surface morphology will change as a result of changes to electrical forces.

This and the mathematical, physical and biological background with further references is further described for example in V. Senez et al, "http://itokon.fujita3.iis.u-tokyo.ac.jp/∼limms/project.html" titled PDMS BASED MICROELCTROFLUIDIG DEVICES FOR IMPEDANCE SPECTROSKOPY FO SINGEL CELLS AND TISSUES; in H. Pauly and H. P. Schwan, Zeitschrift für Naturforschung Part B-Chemie Biochemie Biophysik Biologie und verwandten Gebieten 14 (1959) pages 125 to 131 titled ÜBER DIE IMPEDANZ EINER SUSPENSION VON KUGELFÖRMIGEN TEILCHEN MIT EINER SCHALE; in K. Asami, Y. Takahashi, and S. Takashima, Biochimica et Biophysica Acta (BBA) Molecular Cell Research 1010 (1989) pages 49 to 55 titled DIELECTRIC PROPERTIES OF MOUSE LYMPOCYTES AND ERYTHROCYTES; in R. A. Hoffman, T. S. Johnson, and W. B. Britt, Cytometry 1:377 (1981) titled FLOW CYTOMETRIC ELECTRONIC DIRECT CURRENT VOLUME AND RADIOFREQUENCY IMPEDANCE MEASUREMENTS OF SINGLE CELLS AND PARTICLES; in S. Gawad et al, "1^{st} Annual International IEEE-EMBS Special Topic Conference on Microtechnologies in Medicine & Biology October 12-14, 2000, Lyon FRANCE" pages 1 to 5 titled FABRICATION OF A MICROFLUIDIC CELL ANALYZER IN A MICROCHANNEL USING IMPEDANCE SPECTROSCOPY; in S. Gawad et al "Lab on a Chip", 2001, 1, pages 76 to 82 titled MICROMACHINED IMPEDANCE SPECTROSCOPY FLOW CYTOMETER FOR CELL ANALYSIS AND PARTICLE SIZING; in S. Gawad, P. Batard, U. Seger, S. Metz, and P. Renaud, in "Micro Total Analysis Systems 2002", Vol. 2 (Y. B. e. al., ed.), Kluwer, Nara, Japan, 2002, pages 649 to 651 titled LEUCOCYTES DISCRIMINATION BY IMPEDANCE SPECTROSCOPY FLOW CYTOMETRY. Thes articles and the references cited in these articles are introduced in this application by reference.

EP 1 335 198 A1 discloses to arrange a pair of measurement electrodes and a pair of reference electrodes in a measurement channel for providing a measurement volume between the channel. The pairs of measurement and the reference electrodes are admitted with input signals having the same signal amplitudes and frequencies, and the respective measurement current or voltage signal values are determined from the difference of the respective signals. It is also known to position the particles in the centre of the measurement channel between the electrodes.

US 6 437 551 B1 discloses a microfabricated instrument for detecting and identifying cells and other particles based on alternating current impedance measurements. The impedance sensor electrodes and electrical circuits for detecting signals associated with particles travelling down a microchannel on a microfluidic chip. The impedance sensor electrodes comprise, as also described in the above referenced article of S. Gawad, a sense and reference electrode, which are processed in well-known manner for further computer analysis. Further, this document discloses a normalization procedure for impedance signals (real and imaginary parts) at a multiplicity of frequencies up to eight frequencies. For a technical realisation an electronic to demodulate eight frequencies is expensive and difficult at higher frequencies.

It is therefore the object of the present invention to propose a method for discrimination of particles with impedance spectroscopy which can be used in a microfluidic device and allows within a relatively very short time to obtain information about the size and the different dielectric properties in order to determine the particle.

This problem is solved by the invention as claimed in claim 1. Further advantageous embodiments are claimed in the subclaims.

According to the method a pair of measurement electrodes and a pair of reference electrodes are arranged in a measurement channel each for providing a measurement volume between the electrodes. One particle is moved through the pair of measurement electrodes, and the pairs of measurement electrodes and reference electrodes are admitted with the same input signals having different frequencies and the respective measurement values are determined as known from the prior art. As know from the prior art, the input signal may be a current or voltage signal and the signals either have the same signal amplitude at different frequencies or only one signal having different modulated frequencies. The obtained current or voltage measurement values (in the following only "measurement values) deliver the spectral impedances of the particle at different frequencies.

Then the measurement values at each of the frequencies at which a measurement is performed, which are obtained at the measurement electrodes, are compared with the respective measurement values obtained at the reference electrodes for the determination of particle specific values dependent of the frequencies of the input signals of the particle being moved through the measurement channel. The particle specific values are, for a particle moved between the electrodes, the current or voltage signal values (amplitudes) at a specific frequency at which a measurement is performed. The comparison is performed by calculating the difference between the real and imaginary parts of the measured signal variations which are proportional to the changes in the measurement channel at any given frequency in order to eliminate the influence of the channel.

In the following the particle specific values received at different frequencies (at each of the frequencies at which a measurement is performed) are normalized to one of the particle specific values at one of the frequencies at which a measurement is performed; and, in dependence of the one particle specific value at the one of the frequencies, the obtained normalized particle values are compared with corresponding values of at least one reference particle at each of frequencies at which a measurement is performed. The one of the particle values at one of the frequencies to which the other signals are normalized (called basic value) is preferably one at which the signals are independent of changes in cell dielectric parameters.

By comparing the normalized particle values with the values of the reference particle in dependence of the basic value, it is possible to receive with only three frequencies the desired information concerning the particle moved through the channel. The best result is obtained by using a basic value derived at a frequency at which the signals are independent of changes in cell dielectric parameters. The invention provides a novel discrimination strategy for particles in a microfluidic device. The realization of the single measurements and the processing of the signals obtained are known to a person skilled in the art and disclosed in the cited documents.

According to a preferred embodiment, the discrimination is performed by normalizing a second particle specific value S(F2) and a third particle specific value S(F3) on a first particle specific value S(F1) (particle specific basic value) obtained at specific frequencies F1 - F3 leading to the ratios R1 = S(F2) / S(F1) and R2 = S(F3) / S(F1). The first particle specific value S(F1) is a particle value, in this embodiment, which is a (particle specific) basic value obtained a described above at a chosen frequency, in the following called basic frequency. The basic frequency in this preferred embodiment is the one frequency which is used for measurements, which are only marginally influenced by changes in other cell parameters. The particle specific values S(F2) and S(F3), which are obtained at the frequencies F2 and F3, respectively, are normalized to that basic value S(F1) obtained at the basic frequency F1. The normalized values R1 and R2 of the particle preferably are compared with the respective values of the reference particle in relation to the first specific value S(F1). The comparison shows in relation to the reference values changes in the capacitance or in the conductance of the particle. In connection with the discrimination of cells these changes correspond with changes in the membrane or the cytoplasm, respectively.

The values of the reference particle can be obtained from a data base which contains respective data of a number of particles, for example of biological cells as well as of other materials not from biological nature, or can be obtained by a first calibration step, which gives the information about the reference particle, in this case under consideration of the influence of the measurement channel in which the real measurement is performed.

For obtaining the particle specific values, according to an embodiment of the invention, the electrodes are admitted with a first input signal having a first frequency F1, which provides a first measurement value depending on the size of the particle for determining the respective first particle specific value S(F1) at the first frequency F1; further the electrodes are admitted with a second input signal having a second frequency F2, which provides a second measurement value depending on the capacitive behaviour of the particle for determining the respective second particle specific value S(F2) at the second frequency F2; furthermore the electrodes are admitted with a third input signal having a third frequency F3, which provides a third measurement value depending on the conductive behaviour of the particle for determining the respective third particle specific value S(F3) at the third frequency F3.

In the following the invention is described in detail in connection with a preferred embodiment. The preferred embodiment is discussed in relationship to cells, however, the invention is not limited to biological cells. For better understanding the description refers to the following drawings:
- Figur 1: shows the summary of simulated signal amplitude changes in mVpp at the amplification output due to specific variation in the modelled cell properties (phase information is neglected).
- Figur 2a: demonstrates how discrimination can be achieved for changes in the cell membrane capacitance independent of a scattering in cell size. The ratio S(F2)/S(F1) is plotted against the values for S(F1).
- Figur 2b: demonstrates how discrimination can be achieved for changes in the cytoplasm conductivity independent of a scattering in cell size. The ratio S(F3)/S(F1) is plotted against the values for S(F1).

From the results obtained using the mathematical finite element method or mixture equations, the change that certain parameter will produce on different parts of the impedance spectrum was determined. The cell size and cell position effects influence the whole spectrum but clearly dominate on other parameters at low frequency. The ratios of signals measured at high or medium frequencies to the signal obtained below the dispersion permit some normalization. This normalization can be used to discriminate different types of cells.

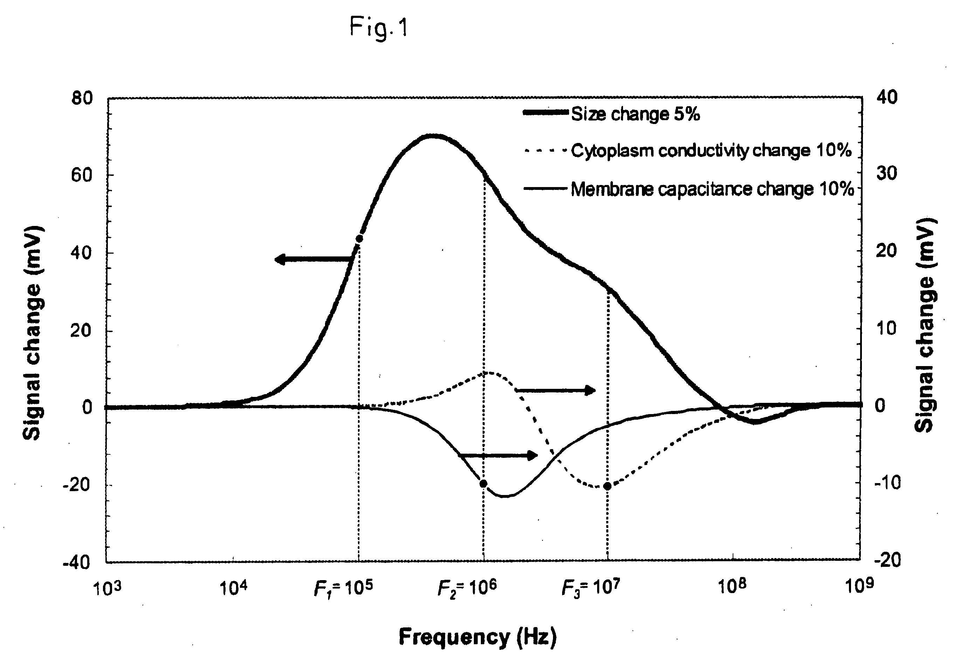

Figure 1 shows three signal amplitude spectra which illustrate the differences between the amplitude spectrum obtained for a 10 µm reference cell and for three cell modifications: diameter (-5%), membrane capacitance Cₘ (+10%) and cytoplasm conductivity σ₂ (+10%). Small changes in size will clearly affect the whole spectrum; but, around 100 kHz, changes due to other parameters are relatively small. Changes in other cell parameters influence the spectrum in different ways at higher frequencies. A change in cell size influences the whole spectrum. A change in the membrane capacitance has an effect in the intermediate region of the spectrum around 1 MHz, whereas a change in the cytoplasm conductivity will be measurable at frequencies close to 10 MHz. From the difference spectra shown in figure 1, a number of frequencies can be determined, which would ideally carry information on a single specific parameter change. We have first selected the frequency F1 at 100 kHz to obtain a size dependent measurement, which is only marginally influenced by changes in other cell parameters.

**Table 1**

| | Signal value *S* / mV | | | Ratios | |
|---|---|---|---|---|---|
| | *S(F1)* *F1* = 100 kHz | *S(F2)* *F2* = 1MHz | *S(F3)* *F3* = 10MHz | *S(F2)*/*S(F1)* | *S(F3)*/*S(F1*) |
| 10 µm Ref. cell | 286.2 | 455.6 | 378.9 | 1.5919 | 1.3236 |
| 10 µm +10% Δ*C*_{*m*} | 286.1 | 445.6 | 376.3 | **1.5575** | 1.3152 |
| 10 µm +10% Δσ_{*2*} | 286.3 | 459.9 | 368.5 | 1.6066 | **1.2872** |
| 9.5 µm Ref. cell | 247.2 | 400.9 | 351.6 | 1.6218 | 1.4226 |
| 9.5 µm +10% Δ*C*_{*m*} | 247.1 | 392.5 | 349.2 | **1.5886** | 1.4133 |
| 9.5 µm + 10% Δσ_{*2*} | 247.2 | 404.5 | 344.0 | 1.6364 | **1.3913** |

Table. 1 shows an example of signal amplitudes (phase information is neglected) for different cell properties at three selected frequencies and ratios obtained from a simulation (e.g. a special simulation language or software for electric/electronic circuits called SPICE). The values are the particle specific values at a given frequency. This values are obtained by calculating the difference between the respective measurement values obtained at the measurement electrodes and the respective measurement values obtained at the reference electrodes at the defined frequencies. The bold values represent the ratios of interest for the discrimination strategy. For frequencies below 100 kHz the signal value depends non-linearly to the cell volume because of the double layer (at the electrode-electrolyte interface) capacitance screening. This is not desirable as it will affect the proposed normalization. In this case, the simulated signal change between the 10 and 9.5 µm cells at 100 kHz is already 13.6% for a 14.2% change in volume. However, as seen in Table 1, the signals obtained at F1 are almost independent of changes in cell dielectric parameters. Two other frequencies F2 = 1 MHz and F3 = 10 MHz are selected to determine the influence of changes in membrane capacitance and cytoplasm conductance, respectively.

The ratios of the simulated values for F2 and F3 to the value obtained for F1 demonstrate a good sensitivity to the parameter of interest, but are still dependent on the cell size. Although defining F1 at a frequency of 300 kHz would give a better normalization for size, it would also introduce some membrane capacitance dependence. It was found that although it could be discriminated significant changes in cell electrical properties in previous experiments cited above, the inherent size scattering in a given cell population remains the parameter to which the impedance sensor is most sensitive.

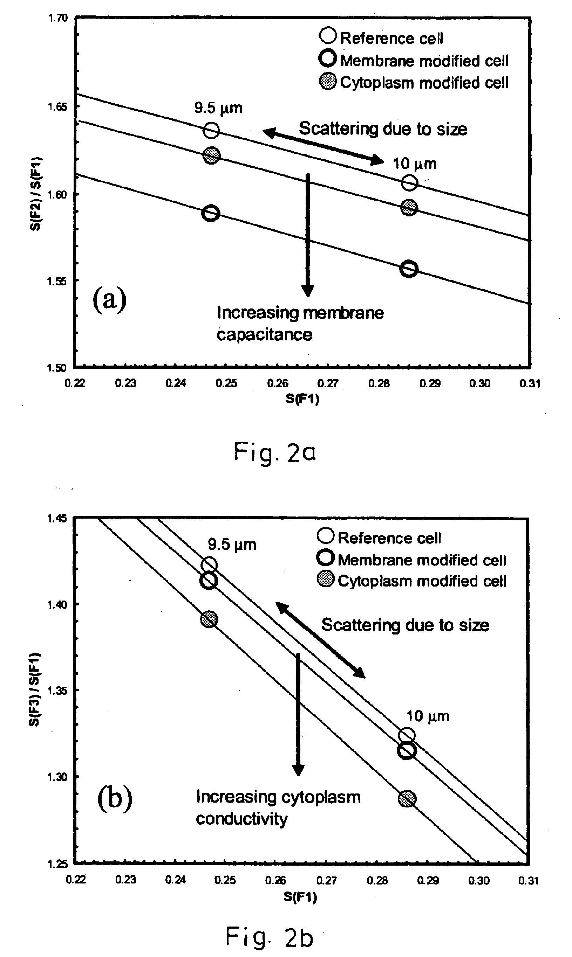

Thus, according to the invention the influence of size scattering can be diminished when investigating other cell parameters, taking the signal values and ratios from Table 1. In figure 2, the ratios R = S(F2)/S(F1) and R = S(F3)/S(F1) are plotted against the value obtained for S(F1), the basic value. The drawn trendlines are characteristic for a scattering due to spreading in cell sizes. Changes in other cell parameters will conversely exhibit spreading along the vertical axis. In figure 2a, a good vertical sensitivity to a change in cell membrane capacitance is illustrated whereas for figure 2b a change in cytoplasm conductance will prevail.

A source of measurement scattering is the variation of particle position in the channel. Negative dielectrophoresis forces can be used to focus the particle trajectories sufficiently close to the channel centreline and obtain reproducible measurements. Using dielectric focussing the fluctuation on the measured signal amplitude is reduced.

According to the invention it is possible to provide a microfabricated impedance spectroscopy cytometer. By known analytical and numerical approaches the sensitivity of the device to a number of parameters can be established: cell position, size and dielectric properties.

Downscaling of the microfluidic channel and the embedding of microelectrodes allow to define small detection volumes and thus improve the sensor sensitivity. Precise flow and particle speed control are necessary to achieve reproducible measurement. The method can be implemented on a chip (for example as disclosed in EP 1 335 198 A1) comprising the required measurement channel with the electrodes and the necessary positioning of the particles in the measurement channel. Such a chip can differentiate single cells according to changes in dielectric properties much more accurately than has been known until now. In addition, integration of new on-chip functionality can be envisioned which will open up a number of additional applications to this technique.

## Claims

1. Method for the discrimination of particles, preferably biological cells, by impedance spectroscopy in a measurement channel which encloses a liquid for transporting the particles, with the following features:
arranging a pair of measurement electrodes and a pair of reference electrodes in the measurement channel each for providing a measurement volume between the electrodes;
moving one particle through the pair of measurement electrodes;
admitting the pairs of measurement electrodes and the pairs of reference electrodes with the same input current or voltage signals having different frequencies and determining the respective current or voltage measurement out signal values at said different frequencies;
comparing said measurement values, obtained at the measurement electrodes, with said measurement values, obtained at the reference electrodes, for the determination of particle specific values dependent of the frequencies of the input signals of the particle being moved through the measurement channel;
normalizing said particle specific values, received at each of the frequencies at which a measurement is performed, to one of said particle specific values at one of said frequencies at which a measurement is performed; and
comparing, in dependence of said one particle specific value at said one of said frequencies, the normalized particle specific values with corresponding normalized values of at least one reference particle at each of the frequencies at which a measurement is performed.

2. Method according to claim 1, wherein said one of the particle values at said one of said frequencies to which the other signals are normalized is one at which the signals are independent of changes in cell dielectric parameters.

3. Method according to claim 1 or claim 2, wherein
the electrodes are admitted with a first input signal having a first frequency (F1), which provides a first measurement value depending on the size of the particle for determining the respective first particle specific value (S(F1)) at the first frequency (F1);
the electrodes are admitted with a second input signal having a second frequency (F2), which provides a second measurement value depending on the capacitive behaviour of the particle for determining the respective second particle specific value (S(F2)) at the second frequency (F2);
the electrodes are admitted with a third input signal having a third frequency (F3), which provides a third measurement value depending on the conductive behaviour of the particle for determining the respective third particle specific value (S(F3)) at the third frequency (F3).

4. Method according to claim 3, wherein the second particle specific value (S(F2)) and the third particle specific value (S(F3)) are normalized on the first particle specific value (S(F1)) leading to the ratios R1 = S(F2) / S(F1) and R2 = S(F3) / S(F1).

5. Method according to claim 4, wherein the normalized values R1 and R2 of the particle are compared with the respective values of the reference particle in relation to the first specific value (S(F1)).
